(19) Europäisches Patentamt
European Patent Office
Office européen des brevets

(11) Publication number: **0 322 555 A2**

# (12) EUROPEAN PATENT APPLICATION

(21) Application number: 88119297.5

(22) Date of filing: 21.11.88

(51) Int. Cl.4: C08J 3/22, C08L 79/08, C08K 9/00

(30) Priority: 23.12.87 US 137377

(43) Date of publication of application: 05.07.89 Bulletin 89/27

(84) Designated Contracting States: DE FR GB IT NL

(71) Applicant: GENERAL ELECTRIC COMPANY
1 River Road
Schenectady New York 12305(US)

(72) Inventor: de Jong, Robertus Edvard 250 South Rosenberger Rd.
Apt. 1 Evns. Highway 69 South
Mt. Vernon Indiana 47620(US)
Inventor: Dickens, Virgel Preston
708 East Lincoln
Mt. Vernon Indiana 47620(US)

(74) Representative: Catherine, Alain
General Electric France Service de Propriété Industrielle 18 Rue Horace Vernet B.P. 76
F-92134 Issy-les-Moulineaux Cédex(FR)

## (54) Novel pigment carrier system.

(57) A method for coloring thermoplastic polymer resins uses a novel carrier composition comprising a colorant such as carbon black and a polyetherimide ester elastomer. Mixing the color concentrate with a thermoplastic polymer such as a polyester or polycarbonate resin in the desired amount provides a colorable composition leading to good surface appearance after molding and an even dispersion of particles of colorant throughout the molded article.

EP 0 322 555 A2

# NOVEL PIGMENT CARRIER SYSTEM

## FIELD OF THE INVENTION

The present invention relates to a novel pigment carrier composition for use in conjunction with thermoplastic polymer resins. More particularly, the present invention relates to a method for attaining the optimum formation of pigment in crystalline polymer products by preparing a concentrate of colorant such as a carbon black in a polyetherimide ester elastomer carrier and then mixing the concentrate in an appropriate amount with the desired thermoplastic polymer resin.

## BACKGROUND OF THE INVENTION

The procedures used to date to incorporate the colorants into the thermoplastic materials have met with varied success. None provide truly satisfactory results, especially if polymers such as crystalline polyesters or polycarbonates are to be colored, because the colorants are difficult to disperse and the colored plastics are difficult to mold into pieces with glossy surfaces.

Because of the deficiencies associated with dry coloring and extrusion, color concentrates have become popular. A color concentrate is defined as a predetermined weight percentage of a colorant which is dispersed in a carrier resin, the product of which is then mixed with the so-called letdown resin which is to be colored or modified. Dispersed color concentrates vary widely in color concentration and physical form. They are often supplied as pellets, although it is also possible to supply them as flakes, liquids or powders. Ideally, the concentrate should contain a greater amount of colorant than carrier in order to obtain the lowest possible letdown or use ratio. Accordingly, percentages of colorant as high as 80% have been used, although most color concentrates used today include 35 - 50% colorant content.

There have been many attempts to provide a universal carrier which is compatible with a large group of resins. In U.S. 3,249,575 (Engle), for example, a color concentrate consisting of a pigment dispersed in a vehicle consisting of compounds of 2-hydroxymethyl-5-norbornene is disclosed which may be used as a vehicle for polyvinyl chlorides, polystyrenes, acrylic plastics, acrylonitrile, cellulosics, polyethylene and polypropylene. The percentage of pigment in the color concentrates ranges from 10 - 80% by weight. However, carbon black, because of its high absorptive powers for resinous materials and relatively low specific gravity, may only be present in from 10 - 20% of the total color concentrate, and even then there is substantial difficulty in molding into work pieces with smooth, glossy surfaces.

Other color concentrates have also been disclosed for coloring thermoplastic resins. For instance, U.S. 3,682,854 (Bennahmias et al.) provides for coloring polyolefins such as polyethylene and polypropylene by using a concentrated meltable colorant containing low density polyethylene and at least 55% by weight of colored florescent pigment particles dispersed therein. U.S. 3,879,341 (Barkey et al.) discloses a dye concentrate for dyeing high density polyesters. U.S. 3,905,937 (Khanna) discloses color concentrates for dyeing synthetic fibers such as polyesters. In order to accomplish this result, a pigment such as titanium dioxide or carbon black, a deflocculating agent such as polyester, and a carrier which is the same as the fiber-forming polymer are combined to form the color concentrate. The pigments may be present in the concentrate from about 1 - 80%, depending upon the type of additive used, the effect desired, and the nature of the fiber-forming polymers.

However, it has been found that carriers such as the above cannot be used in conjunction with certain colorants due to the particular properties of the colorant. For instance, particles, especially carbon black particles, are known to increase the melt viscosity of the resin due to their structure and particle size. For this reason, carriers such as the polycarbonates, and poly(1,4-butylene-terephthalates) (PBT), cannot be used for certain carbon black systems because an evenly dispersed system cannot be obtained.

At present, some use has been made of low density polyethylene or polyester thermoplastic elastomers such as HYTREL® (DuPont), a polyether polyester, as carriers for colorants to be incorporated into polyester-type letdown polymers.

Such drawbacks are manifested by surface migration during the molding process (referred to as "plate-out"), and poor surface appearance.

Mention is made of commonly assigned U.S. 4,556,688 (McCready et al.), which discloses a family of thermoplastic polyetherimide ester elastomers having excellent physical properties. At column 9, lines 8 -16

of McCready it is disclosed that the properties of these polyetherimide esters may be modified by the incorporation of various inorganic fillers such as carbon black in amounts up to 50% by weight of the total composition. However, there is no suggestion to mix such a polyetherimide ester and carbon black with a letdown resin to obtain a colorable composition for molding without any of the above-mentioned shortcomings.

It has now been discovered that the polyetherimide ester thermoplastic elastomer resins of the McCready et al patent can be used as universal carrier resins for colorants ard then letdown for use with thermoplastic letdown polymer resins. Colored molded articles are obtained which evidence substantial resistance to plate-out. As a further advantage, if high structure carbon blacks are used as the colorant, the specified carriers resist melt viscosity build-up in a very desirable manner.

## SUMMARY OF THE INVENTION

In accordance with the present invention there is provided an improved method for coloring thermoplastic polymer resins comprising:
(i) preparing a concentrate of colorant in a polymeric resin carrier; and
(ii) mixing the concentrate with a thermoplastic letdown polymer in an amount effective to provide a mixed composition adapted to produce the desired color after melt blending,
in which the improvement comprises using as the polymeric resin carrier a thermoplastic polyetherimide ester elastomer.

In preferred embodiments, the colorant comprises a pigment, especially preferably a carbon black. In other preferred embodiments the thermoplastic letdown polymer comprises a crystalline poly(1,4-butylene terephthalate) or a poly(bisphenol-A carbonate).

## DETAILED DESCRIPTION

A wide variety of inorganic and organic colorants in various forms may be used to impart color and other properties in the present invention. Among the inorganic colorants which may be used are pigments, such as metallic oxides (iron, titanium, chromium, etc.), earth colors (siennas, etc.), lead chromates, metal powder suspensions (gold, aluminum), carbon black, mixtures of any of them and the like. Among the organic colorants for the present invention are animal-based and vegetable based pigments as well as synthetic pigments and dyes, such as phthalocyanine, lithols, quinacridones, isoindolenes, toluidine, perylenes, para red dyes, toners, lakes, mixtures of any of them, and the like. The selection of a particular colorant will of course depend upon the choice of color to be imparted to the material as well as on the material itself. Those skilled in this art are well aware of suitable colorants, letdown resins and amounts suitable for use.

Typical of the dyes which are suitable for use are anthraquinone, azo, nigrosine, acidic, basic, chrome, and direct dyes. The selection of a particular dye will depend upon the particular color and brightness requirement, as well as upon the light fastness and migration tendencies of each dye.

Suitable dyes for thermoplastic polymers are described in the Kirk-Othmer Encyclopedia of Chemical Technology 3d ed., Vol. 8 1979, J. Wiley & Son's, Inc., New York, N.Y., pp. 159 - 408.

Other suitable pigments and dyes for thermoplastic polymers are described in the Modern Plastics Encyclopedia, 1982-1983, McGraw-Hill, Inc. N.Y., pp. 135-143 and 584-595.

The polyetherimide esters of the present invention are known. Many are available commercially under the trademark LOMOD® resins (General Electric Company). They may be prepared by processes described, for example, in the above-mentioned McCready et al. patent from
(a) a diol;
(b) dicarboxylic acid or a diester thereof;
(c) a poly(oxyalkylene)diamine and
(d) a tricarboxylic acid or derivatives
thereof having two vicinal carboxyl groups or the anhydride group and an additional carboxyl group which must be esterifiable.

For use in the present invention it is preferred that the carrier resin be prepared from (a) one or more $C_2$-$C_{15}$ aliphatic and/or cycloaliphatic diols, (b) one or more $C_4$-$C_{16}$ aliphatic, cycloaliphatic and/or aromatic

dicarboxylic acids or ester derivatives thereof (c) one or more polyoxyalkylene diamines having a molecular weight of from about 600 to about 12000, and (d) a tricarboxylic acid or derivative thereof wherein the anhydride derivative is represented by the formula:

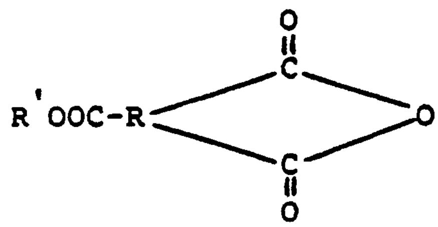

where R is a trivalent organic radical and R′ hydrogen or a $C_1$ to $C_6$ aliphatic monovalent organic radical.

The amount by which these reactants are employed and thus incorporated into the polymers used in the present invention is dependent to a large extent on the properties desired in the resultant copolyetherimide ester. In general, the amount of reactants (c) and (d) used will be such that the weight ratio of polyoxyalkylene diimide diacid prepared therefrom to the amount of dicarboxylic acid (b) would be from about 0.25 to 2.0, preferably from about 0.4 to about 1.4.

Suitable diols (a) for use in preparing the thermoplatic elastomers include saturated and unsaturated aliphatic and cycloaliphatic dihydroxy compounds as well as aromatic dihydroxy compounds. These diols are preferably of a low molecular weight, i.e. having a molecular weight of about 300 or less. When used herein, the term "diols" and "low molecular weight diols" should be construed to include equivalent ester forming derivatives thereof, provided, however, that the molecular weight requirement pertains to the diol only and not to its derivatives. Exemplary of ester forming derivatives there may be given the acetates of the diols as well as, for example, ethylene oxide or ethylene carbonate for ethylene glycol.

Preferred saturated and unsaturated aliphatic and cycloaliphatic diols are those having from about 2 to 19 carbon atoms. Exemplary of these diols there may be given ethylene glycol; propanediol; butanediol; pentanediol; 2-methyl propanediol; 2,2-dimethyl propanediol; hexanediol; decanediol; 2-octyl undecanediol; 1,2-1,3- and 1,4-dihydroxy cyclohexane; 1,2-, 1,3-and 1,4-cyclohexane dimethanol; butenediol; hexenediol, etc. Especially preferred are 1,4-butanediol and mixtures thereof with hexanediol or butenediol, most preferably 1,4-butanediol.

Aromatic diols suitable for use in the practice of the present invention are generally those having from 6 to about 19 carbon atoms. Included among the aromatic dihydroxy compounds are resorcinol; hydroquinone; 1,5-dihydroxy napthalene; 4,4′-dihydroxy diphenyl; bis(p-hydroxy phenyl)methane and 2,2-bis(p-hydroxy phenyl)propane.

Dicarboxylic acids (b) which are suitable for use in making the thermoplastic elastomers are aliphatic, cycloaliphatic, and/or aromatic dicarboxylic acids.

Representative aliphatic and cycloaliphatic acids which can be used are sebacic acid, 1,2-cyclohexane dicarboxylic acid; 1,3-cyclohexane dicarboxylic acid; 1,4-cyclohexane dicarboxylic acid; adipic acid; glutaric acid; succinic acid; oxalic acid; azelaic acid; diethylmalonic acid; allylmalonic acid; dimer acid; 4-cyclohexane-1,2-dicarboxylic acid; 2-ethylsuberic acid; tetramethylsuccinic acid; cyclopentanedicarboxylic acid; decahydro-1,5-naphthalene dicarboxylic acid, 4,4-bicyclohexyl dicarboxylic acid; decahydro-2, 6-naphthalene dicarboxylic acid; 4,4 methylenebis(cyclohexane carboxylic acid); 3,4-furan dicarboxylic acid; and 1,1-cyclohexane dicarboxylic acid. Preferred aliphatic acids are cyclohexane dicarboxylic acids, sebacic acid, dimer acid, glutaric acid, azelaic acid and adipic acid.

Representative aromatic dicarboxylic acids which can be used include terephthalic, phthalic and isophthalic acids, bi-benzoic acid, substituted dicarboxy compounds with two benzene nuclei such as bis(p-carboxyphenyl) methane, oxybis(benzoic acid), ethylene-1,2-bis (p-oxybenzoic acid), 1,5-naphthalene dicarboxylic acid, 2,6-naphthalene dicarboxylic acid, 2,7-naphthalene dicarboxylic acid, phenanthrene dicarboxylic acid, anthracene dicarboxylic acid, 4,4′-sulfonyl dibenzoic acid and halo and $C_1$-$C_{12}$ alkyl, alkoxy and aryl ring substitution derivatives thereof. Hydroxy acids such as p(2-hydroxyethoxy)benzoic acid can also be used provided an aromatic dicarboxylic acid is also present.

Preferred dicarboxylic acids for the preparation of the polyetherimide esters are the aromatic dicarboxylic acids, mixtures thereof and mixtures of one or more dicarboxylic acid with an aliphatic and/or cycloaliphatic dicarboxylic acid, most preferably the aromatic dicarboxylic acids. Among the aromatic acids, those with 8-16 carbon atoms are preferred, particularly the benzene dicarboxylic acids, i.e., phthalic, terephthalic and isophthalic acids and their dimethyl derivatives. Especially preferred is dimethyl terephthalate.

The polyoxyalkylene diamines (c) suitable for use in the present invention may be characterized by the following formula:

$H_2N\text{-}G\text{-}NH_2$

wherein G is the radical remaining after the removal of the amino groups of a long chain alkylene ether diamine. These polyether diprimary diamines are available commercially from Texaco Chemical Company under the trademark Jeffamine®. In general, they are prepared from known processes for the amination of glycols, such as those disclosed in Belgium Pat. No. 634,741; U.S. Pat. Nos. 3,654,370, 3,155,728 and 3,236,985; and French Pat. Nos. 1,551,605 and 1,466,708.

Representative long chain ether glycols suitable for use in the manufacture of polyaxylalkylene diamines (c) are the poly(alkylene ether) glycols including poly(ethylene ether)glycol; poly(propylene ether)-glycol; poly(tetramethylene ether)glycol; random or block copolymers of ethylene oxide and propylene oxide, including propylene oxide and poly(propylene oxide) terminated poly(ethylene ether)glycol; and block copolymers of tetrahydrofuran with minor amounts of a second monomer such as ethylene oxide, propylene oxide, and methyl tetrahydrofuran (used in proportion such that the carbon-to-oxygen mole ratio in the glycol does not exceed about 4.3). Polyformal glycols prepared by reacting formaldehyde with diols such as 1,4-butanediol and 1,5-pentanediol are also useful. Especially preferred poly(alkylene ether)glycol and poly-(ethylene ether)glycols end capped with poly(propylene ether)glycol and/or propylene oxide.

The tricarboxylic acid (d) may be almost any carboxylic acid anhydride containing an additional carboxylic group or the corresponding acid therof containing two imide-forming vicinal carboxyl groups in lieu of the anhydride group. Mixtures thereof are also suitable. The additional carboxylic group must be esterifiable.

While trimellitic anhydride is preferred as the tricarboxylic component, any of a number of suitable tricarboxylic acid constituents will occur to those skilled in the art, including 1,6,7-naphthalene tricarboxylic anhydride; 3,3′,4-diphenyl tricarboxylic anhydride; 3,3′4 benzophenone tricarboxylic anhydride; 1,3,4-cyclopentane tricarboxylic anhydride; 2,2′3-diphenyl tricarboxylic anhydride; diphenyl sulfone3,3′,4-tricarboxylic anhydride, ethylene tricarboxylic anhydride; 1,2,5-naphthalene tricarboxylic anhydride; 1,2,4-butane tricarboxylic anhydride; diphenyl isopropylidene - 3,3′,4-tricarboxylic anhydride; 1,1′-diphenylether-3,3′4′tricarboxylic anhydride; 1,3,4-cyclohexane tricarboxylic anhydride; etc. These tricarboxylic acid materials can be characterized by the following formula:

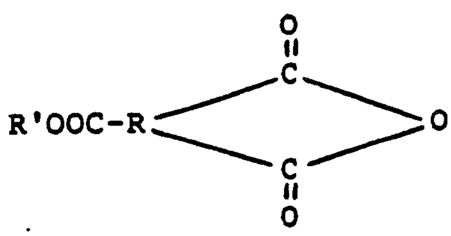

wherein R is a trivalent organic radical, preferably a $C_2$ to $C_{20}$ aliphatic, aromatic, heterocyclic or cycloaliphatic trivalent organic radical and R′ is preferably hydrogen or a monovalent organic radical preferably selected from the group consisting of $C_1$ to $C_6$ aliphatic and/or cycloaliphatic radicals and $C_6$ to $C_{12}$ aromatic radicals, e.g., phenyl; most preferably hydrogen.

The amount by which each of the foregoing reactants is employed in the preparation of the thermoplastic elastomers is not, in general, critical and depends, in part, upon the desired properties of the resultant polymer. Obviously, sufficient amounts of diol versus diacid and tricarboxylic acid versus diamine must be present, as recognized in the art, to allow for substantially complete polymerization.

In its preferred embodiments, the polyetherimide esters of the present invention will comprise the reaction product of dimethyl terephthalate, optionally with up to 40 mole percent of another dicarboxylic acid; 1,4-butanediol, optionally with up to 40 mole percent of another saturated or unsaturated aliphatic and/or cycloaliphatic diol; a polyoxyalkylene diamine of molecular weight of from about 600 to about 12000, preferably from about 900 to about 4000, and trimellitic anhydride. In its most preferred embodiments, the diol will be 100 mole percent 1,4-butanediol and the dicarboxylic acid will be 100 mole percent dimethyl terephthalate.

The polyetherimide esters described herein may be prepared by conventional

esterification/condensation reactions for the production of polyesters. Exemplary of the processes that may be practiced are as set forth in, for example, U.S. Patent Nos. 3,023,192; 3,763,109; 3,651,014; 3,663,653 and 3,801,547. Typically, the reactants will be charged into the reactor vessel and heated to 150° to 260° C. Heating is continued until methanol and/or water evolution is substantially complete. Depending upon the temperature, catalyst and diol excess, this polymerization is complete within a few minutes to a few hours. The low molecular weight prepolymer as produced may subsequently be carried to a high molecular weight polymer by polycondensation. The polycondensation step entails elevating the temperature to between about 240° C. to 300° C. and decreasing the pressure in the reaction vessel to less than about 670 Pa., preferably less than about 250 Pa or (2 mm Hg). During polycondensation excess diol is distilled off and additional ester interchange occurs to build the polymer.

Obviously, it is possible to vary the reaction conditions and the like. Additionally, it is possible to vary the process itself. For example, it is possible to prepolymerize the aromatic dicarboxylic acid (b) and diol (a) and/or preimidize the diamine. Forming the prepolyester of (a) and (b) can be achieved by conventional esterification process as described above as well as in U.S. Patent Nos. 2,465,319; 3,047,539 and 2,910,466 Additionally, or alternatively, it is possible to preform a diimide diacid or the ester derivatives thereof from the polyoxyalkylene diamine (c) and tricarboxylic acid (d).

In general, the colorant according to the present invention will be present at from about 1 to about 80 percent by weight of the concentrate, the remainder being the polyetherimide ester elastomer. The amounts used will depend upon, for instance, the particular pigment or dye used, its specific gravity, the effect desired, etc. A colorant with a relatively low specific gravity such as carbon black can be used in lesser amounts, 10 - 20 percent by weight of the total color concentrate. Furthermore, it is well-known that some pigments, because of their relatively large surface areas, have a greater tendency to absorb resinous materials than others such as chrome orange, chrome yellow or titanium dioxide, and for this reason carbon black and the like can be dispersed in less vehicle. In preferred embodiments of the present invention, the color concentrates include from about 20 to about 30 percent by weight of the colorant, the remainder being the polyetherimide ester elastomer.

The carrier polymer is present in the concentrate at a concentration which is determined by the difference between the total concentrate desired and the amount of colorant to be incorporated. Ordinarily, the carrier polymer constitutes from about 20% to about 99% of the total concentrate.

When the color concentrates of this invention are used to color thermoplastic polymer resins, according to conventional practices, the color concentrate which is prepared may constitute up to about 10 percent by weight of the final colored plastic article. Although higher proportions of color concentrate may be incorporated, such proportions have been found to be commercially uneconomical.

The color concentrates of the present invention may be prepared in accordance with the techniques wellknown to those skilled in the art. The concentrates themselves can be manufactured on high intensity, high shear equipment, such as compounding extruders, two-roll compounding mills, and in Banbury mixers. It is contemplated that the color concentrate will be added to the thermoplastic polymer resin by any of the usual methods, such as being incorporated by extrusion, injection molding, hot melt incorporation, and other methods well known to those skilled in the art.

It is also contemplated that the compositions of the present invention include an effective amount of a reinforcing agent and/or a flame retardant.

The reinforcing agents in accordance with the present invention include reinforcing fillers such as fibrous (filamentous) glass and/or graphite; mineral fillers such as mica, talc and the like, and preferably clay. The filamentous glass suitable for use as reinforcement in such embodiments is well known to those skilled in the art and is available from a number of manufacturers. For compositions ultimately to be employed for electrical uses, it is preferred to use filaments of a lime-aluminum boro-silicate glass that is substantially soda-free. This is known as "E" glass. However, other glasses are useful when electrical properties are not important, and there the low soda glass known as "C" glass can be used. The filaments are made by standard processes, e.g., by steam, air or flame blowing and, preferably, by mechanical pulling. The filaments preferably have diameters between about 0.00012" and 0.00075", but this is not critical to the present invention. The fillers can be untreated or treated with silane. The polyehtylene preferably is of the low density type.

The length of the glass filaments and whether or not they are bundled into fibers and the fibers bundled in turn to yarns, ropes or rovings, or woven into mats and the like, are also not critical to the invention. However, in preparing the molding compositions, it is convenient to use the filamentous glass in the form of chopped strands about 1/8" to about 2" long. In articles molded from the compositions, on the other hand, fibers of shorter length may be present because, during compounding, considerable fragmentation occurs. This is desirable, however, because, the best properties are exhibited by thermoplastic injection molded

articles in which the filament lengths lie between about 0.0005" and 0.250".

The amount of the filler varies widely depending on the strength specifications which are to be met, it being essential only that an amount is employed which is at lest sufficient to provide some reinforcement. Preferably, however, the weight of the reinforcing fibers is between about 1% and 60% of the combined weight of filler and the resinous components of the mixture.

The composition of the present invention, with and without fibrous reinforcement and filler, can be rendered flame retardant with an effective amount of a conventional flame retardant agent. As is well known, flame retardants can be based on elementary red phosphorus, phosphorus compounds, halogen and nitrogen compounds alone or, preferably, in further combination with synergists such as antimony compounds. Especially useful are polymeric and oligomeric flame retardant agents comprising tetrabromobisphenol-A carbonate units; see, for example, Wambach, U.S. Patent No. 3,833,685 which is incorporated herein by reference.

Other materials such as stabilizers, drip retardants and the like can be added for their conventionally employed purposes in conventional amounts.

The novel carrier composition set forth herein is preferentially used in conjunction with thermoplastic polymer resins, such as crystalline polyesters and polyamides or polycarbonates. However, the carrier composition disclosed herein may be used with a wide variety of thermoplastic polymer resins, including polyvinyl chlorides, polystyrenes, acrylic plastics, acrylonitriles, cellulosics such as cellulose acetate, cellulose propionate, cellulose acetobutyrate, and the like, as well as polyphenylene ethers and their blends with other resins such as high impact polystyrene, polyamides or polyesters.

Preferred embodiments of this invention include the use of this novel pigment carrier composition in conjunction with polyester resins such as poly(ethylene terephthalate), poly(butylene terephthalate), poly-(cyclohexylene-1,4-dimethylene terephthalate), copolyetheresters, copolyetheresterimides, a polycarbonate, a poly(ester carbonate), or polymeric blends of any of the foregoing, and also with polyetherimide ester resins.

## DETAILED DESCRIPTION OF THE PREFERRED EMBODIMENTS

The following examples are presented as illustrative of the present invention.

In the examples and tables, materials are designated by trademarks and by symbols, and these have the following meanings:

| | |
|---|---|
| PBT | Poly(1,4-butylene terephthalate) |
| EVA | Poly(ethylene-co-vinyl acetate) |
| KM-653 | Rohm and Haas impact modifier -- polybutadiene core polystyrene/poly (methyl) methacrylate shell |

| | |
|---|---|
| LOMOD® J resin: ("generic") | 1,4-benzenecarboxylic acid, dimethylester polymer with 1,4-butanediol and poly(oxypropylene)-bis-(N- trimellitimide); Procedure of U.S. 4,556,688; |
| LOMOD® J10 resin: | LOMOD J, with Flexural modulus 10 Kpsi; Polyether content 52% |
| LOMOD® J50 resin: | LOMOD J, with Flexural modulus 50 Kpsi; Polyether content 33% |
| BP800 black: | Black Pearl 800 carbon black, manufactured by Cabot Corporation |
| Vulcan 9<br>Moncarch 1300<br>Monarch 800 | Carbon black, manufactured by Cabot Corporation |
| Norchem NPE831 resin: | Low density polyethylene (LDPE), product of Northern Chemical Co. |
| R212 concentrate: | 50% Monarch 800 carbon black in LDPE |
| R213 concentrate: | 25% Vulcan 9 carbon black in PBT |
| R2900 concentrate: | 30% Monarch 800 carbon black in LOMOD® J10 resin |
| LIM Impact modifier concentrate: | 49% VALOX® 315 resin (PBT); 50% KM-653; 1% stabilizer |
| LD1337 concentrate: | 35% DeGussa carbon black, manufactured by DeGussa Corp., Black in LOMOD® J10 resin |
| LD1338 concentrate: | 35% Vulcan 9 carbon black in LOMOD® J10 resin |
| LD1339 concentrate: | 35% Monarch 800 carbon black in LOMOD® resin |
| LD1340 concentrate: | 35% Monarch 1300 carbon black in LOMOD® J10 resin |
| FRC-3 flame retardant concentrate; | 67% FR-25, 20% $SB_2O_3$; 13% EVA |
| IRGANOX® 1010 antioxidant | Tetrakis (3,5-ditertbutyl-4-hydroxyphenylcinnamyl) pentaerythritol |
| RL1624-TB50 | Brominated polycarbonate (25 percent bromine by weight) |

## EXAMPLES 1 - 3

Three compositions are prepared comprising concentrates of carbon black in a polyetherimide ester thermoplastic resin. The concentrates were mixed with a crystalline poly(1,4-butylene terephthalate) letdown resin and colorable compositions in accordance with this invention were produced. For comparison purposes, concentrates of carbon black in a prior art carrier resin, low density polyethylene, were also prepared and mixed with the same crystalline letdown resin. The blended compositions were molded into standard work pieces and examined for pigment plate-out and adverse effects on surface appearance which in the unpigmented resin is very smooth and glossy. The molded articles are also tested for physical properties. The formulations used in the results obtained are set forth in Table 1:

Table 1: Colored Compositions Comprising PBT Polyester and Carbon Black Using LOMOD® Resin and LDPE as Carriers

| Example | 1A* | 1 | 2B* | 2 | 3C* | 3 |
|---|---|---|---|---|---|---|
| VALOX® 315 | 63.35 | 61.02 | 99.25 | 98.92 | -- | -- |
| VALOX® 295 | -- | -- | -- | -- | 54.65 | 53.65 |
| RL1624 | 26.0 | 26.0 | -- | -- | -- | -- |
| 85/15 AOC | 6.1 | 6.1 | -- | -- | -- | -- |
| NORCHEM® NPE831 | -- | 1.0 | -- | -- | -- | -- |
| LEXAN® 101 | 2.0 | 2.0 | -- | -- | -- | -- |
| STABILIZER | 0.15 | 0.15 | 0.15 | 0.15 | 0.15 | 0.15 |
| Zinc Phosphate | 0.4 | 0.4 | -- | -- | -- | -- |
| R212 | 2.0 | -- | 0.5 | | 1.5 | -- |
| LOMOD®J10-70% Monarch 800-30% | -- | 3.33 | -- | 0.83 | -- | 2.5 |
| Mold release | -- | -- | 0.1 | 0.1 | -- | -- |
| Glass | -- | -- | -- | -- | 30 | 30 |
| FRC - 3 | -- | -- | -- | -- | 13.2 | 12.2 |
| PE 18 | -- | -- | -- | -- | 0.2 | 0.2 |
| Drip Retardant | -- | -- | -- | -- | 0.3 | 0.3% |
| Melt Viscosity @482°F; Poise | 10980 | 10910 | 1110 | 1080 | 7860 | 8860 |
| Monsanto Viscosity Poise; | -- | -- | -- | -- | $T_0$ 3490<br>$T_{10}$ 3440 | 3620<br>3920 |
| Izod Impact, Notched; Ft. Lbs./in. | 0.84 | 0.92 | 0.49 | 0.49 | 1.68 | 1.84 |
| Tensile Elongation; % | 89 | 45 | 142 | 200 | -- | -- |

TABLE 1 (continued)

| Example | 1A* | 1 | 2B* | 2 | 3C* | 3 |
|---|---|---|---|---|---|---|
| Tensile Strength; psi | 8540 | 8310 | 8560 | 8540 | 20170 | 20340 |
| Flexural Strength; psi | -- | -- | -- | -- | 29120 | 29320 |
| Flexural Modulus; psi | -- | -- | -- | -- | 1098 | 1139 |
| Specific gravity | 1.395 | 1.397 | 1.314 | 1.314 | 1.595 | 1.613 |
| Falling Dart Impact** | 7/10 | 8/10 | -- | -- | -- | -- |
| Spiral Flow*** | 6 7/8 | 7 1/8 | 19 3/8 | 19 3/4 | 11 3/16 | 11 3/16 |
| Plate-out | Substantial | None | Substantial | None | Substantial | None |
| Surface Appearance | Not Good | Excellent | Not Good | Excelent | Not Good | Excellent |

*Control for comparison

** Impacted at 300 ft lbs: 7/10 - 7 samples passed out of 10 tested. 8/10 = 8 samples passed out of 10 tested.

*** Spiral flow channel dimensions 0.313 x 0.0088"

The excellent compatibility of the polyetherimide ester additive carrier with polyester is clearly demonstrated in comparing Examples 1 - 3 with the respective controls, and this includes embodiments reinforced with glass. Because of this improved compatibility, surface migration of the carbon black during molding ("plate out") did not occur, resulting in a good surface appearance.

EXAMPLES 4 - 8

Five colorable compositions in accordance with this invention are prepared by blending carbon black with a carrier resin comprising a polyetherimide ester elastomer and using a blend of about 60:10 w/w of

polyetherimide ester resin and poly(1,4-butylene terephthalate) resin as a letdown resin. For comparison purposes, a color concentrate comprising a poly(1,4-butylene terephthalate) carrier resin is also prepared. The colorable compositions are molded and inspected for dispersion and surface appearance and subjected to physical testing. The formulations used and results obtained are set forth in Table 2 as follows:

Table 2: Carbon Black Colored Compositions Comprising Polyesterimide ester Resins and Polyester Resins

| Example | 4 | 5 | 6 | 7 | 8 | 8D* |
|---|---|---|---|---|---|---|
| Composition (percent) | | | | | | |
| LOMOD® J10 | 58 | 56.2 | 57.6 | 58 | 57.3 | 59.5 |
| VALOX® 315 | 10 | 10 | 10 | 10 | 10 | 5.4 |
| LIM conc. | 30 | 30 | 30 | 30 | 30 | 30 |
| Stabilizers | 0.5 | 0.5 | 0.5 | 0.5 | 0.5 | 0.5 |
| R2900 | -- | -- | -- | -- | 2.2 | -- |
| R213 concentrate | -- | -- | -- | -- | -- | 4.6 |
| LD1337 concentrate | 1.5 | -- | -- | -- | -- | -- |
| LD1338 concentrate | -- | 3.3 | -- | -- | -- | -- |
| LD1339 concentrate | -- | -- | 1.9 | -- | -- | -- |
| LD1340 concentrate | -- | -- | -- | 1.5 | -- | -- |
| Melt Viscosity @482°F; Poise | 1926 | 2749 | 2728 | 2689 | 2659 | 2476 |
| Izod Impact, Notched; Ft. Lbs./in.** | 4HB/.94 | NB | 2HB/2NB | 2HB/2PB | 2NB/2HB | NB |
| Tensile Elongation; % | 224 | 228 | 238 | 224 | 233 | 243 |
| Tensile Strength, psi | 2820 | 2923 | 2923 | 2816 | 2923 | 3030 |
| Flexural Strength, psi | 2180 | 2230 | 2210 | 2155 | 2250 | 2220 |
| Flexural Modulus, psi | 44450 | 45230 | 45230 | 43690 | 46050 | 45630 |

TABLE 2 (continued)

| Example | 4 | 5 | 6 | 7 | 8 | 8D* |
|---|---|---|---|---|---|---|
| Specific gravity | 1.18 | 1.18 | 1.18 | 1.18 | 1.18 | 1.18 |
| Shrink; (with/against) flow, mils./in. | 19/19.4 | 18/18.7 | 18.5/19.7 | 19/5/19.6 | 19.5/19.6 | 19/19.6 |
| Shrink annealed 120°C./hr. | 21.6/22 | 21/21.8 | 21.6/22 | 21.6/22 | 21.6/22 | 21.9/22 |
| Plate-out | None | None | None | None | -- | -- |
| Surface Appearance | Excellent | Excellent | Excellent | Excellent | -- | -- |

*Control for comparison

** HB = hinge break; PB = partial break;
NB = non-break; as defined in ASTM D256

The excellent compatibility of the polyetherimide ester carrier resin with this particular letdown resin combination is demonstrated by the good surface appearance of the molded articles.

EXAMPLES 9 - 12

Four high structure carbon blacks (carbon blacks having small diameters and/or being high in oil absorption) and normally difficult to disperse in polyester resins, polycarbonate resins and the like, are mixed at 30 wt % loadings in a polyetherimide ester carrier resin. At this high loading, three of the four carbon blacks are still suitable for letdown in crystalline thermoplastics as evidenced by the data in Table 3:

TABLE 3

| Table 3. Melt Flow Index (MFI) (g/10 min.) For Different Carbon Black Concentrates in LOMOD● J10 Resin at 30% Loadings | | | |
|---|---|---|---|
| Conditions: Weight 5 kg., T-230 °C | | | |
| Example | Concentrate | Carbon Black | MFI |
| 9 | A - LD1337 | Color Black FW 200 | 200 |
| 10 | B - LD1338 | Vulcan 9 | 16.8 |
| 11 | C - LD1339 | Monarch 800 | 2.4 |
| 12 | D - LD1340 | Monarch 1300 | No Flow |

If the respective concentrates A - C are letdown in poly(1,4-butylene terephthalate) and then molded, evenly dispersed systems are obtained which are due to the excellent melt flow of the carrier resin. Even though concentrate D cannot easily be used, if it is reformulated to contain less carbon black, the adverse effect of "structural viscosity" will be overcome.

Results of the foregoing have been confirmed in other experiments. In these experiments, LOMOD® J10 resin and LOMOD® J50 resin were compounded with 20%, 25% and 30% of BP800 carbon black. After extruding the same into films, the resultant blends exhibited smooth surfaces and excellent carbon black dispersion, the latter being evidenced by measurements of electrical volume conductivity.

The above-mentioned patents are hereby incorporated by reference.

Obviously, other modifications will suggest themselves to those skilled in the art in light of the above-detailed description. In particular, it is contemplated that different colorants may be substituted for the carbon blacks which are set forth in the examples. These colorants may include all inorganic and organic pigments such as titanium dioxide, zinc oxide, antimony oxide, titanates, and the like, and dyes such as dihydroxy-bis-arylaminoanthraquinones, cyanobenzeneazoanilines, and mixtures of these, and the like. As the letdown resins there can be used polyamides, such as nylon-6,6, polycarbonates, such as poly-(bisphenol A carbonate) poly(ester carbonates), poly(sulfones), polyarylates, poly(phenylene ethers), polystyrenes, mixtures of any of them and the like. All such modifications are within the full intended scope of the present invention as defined by the appended claims.

**Claims**

1. In a method for coloring thermoplastic polymers comprising
(i) preparing a concentrate of a colorant in a polymeric resin carrier; and
(ii) mixing said concentrate with a thermoplastic letdown polymer in an amount effective to provide a mixed composition adapted to produce the desired color after melt blending,
the improvement which comprises using as said polymeric resin carrier a thermoplastic polyetherimide ester elastomer.

2. A method as defined in Claim 1 wherein said colorant comprises a pigment.

3. A method as defined in Claim 2 wherein said colorant comprises an inorganic pigment.

4. A method as defined in Claim 3 wherein said colorant comprises a carbon black, titanium dioxide, an iron oxide, antimony oxide, zinc oxide, chromium dioxide, lead chromate, gold, aluminum, an earth color or a mixture of any of the foregoing.

5. A method as defined in Claim 4 wherein said colorant comprises a carbon black.

6. A method as defined in Claim 5 wherein said carbon black comprises a high structure carbon black.

7. A method as defined in Claim 2 wherein said colorant comprises an organic pigment or dye.

8. The method as defined in Claim 7 wherein said colorant comprises an animal or a vegetable-based pigment, a phthalocyanine, a lithol, an isoindolene, a perylene, a toluidine, a para red dye, a toner, a lake, or a mixture of any of the foregoing.

9. A method as defined in Claim 1 wherein said polyetherimide ester elastomer comprises the reaction product of

(a) a diol;

(b) a dicarboxylic acid or a diester thereof;

(c) a poly(oxyalkylene) diamine and

(d) a tricarboxylic acid having two vicinal carboxyl groups or the anhydride thereof.

10. A method as defined in Claim 1 wherein, in said polyetherimide ester elastomer diol (a) comprises butanediol; diester (b) comprises dimethyl terephthalate; poly(oxyalkylene)diamine (c) comprises poly-(propylene ether)diamine; and tricarboxylic acid anhydride (d) comprises trimellitic acid anhydride.

11. A method as defined in Claim 1 wherein said thermoplastic letdown polymer comprises a crystalline polymer.

12. A method as defined in Claim 11 wherein said thermoplastic letdown polymer comprises a polyester, a copolyetherester, a copolyetheresterimide, a polycarbonate, a poly(ester carbonate), or a mixture of any of the foregoing.

13. A method as defined in Claim 12 wherein said polyester comprises poly(1,4-butylene terephthalate).

14. A method as defined in Claim 12 wherein said polycarbonate comprises poly(bisphenol-A carbonate).

15. A method as defined in Claim 1 wherein said thermoplastic letdown polymer includes an effective amount of a reinforcing agent.

16. A method as defined in Claim 1 wherein said thermoplastic letdown polymer includes an effective amount of a flame retardant.

17. A method as defined in Claim 1 wherein said thermoplastic letdown polymer includes effective amounts of a reinforcing agent and a flame retardant.

18. A colorable polymer composition prepared by the method of Claim 1.

19. A colorable polymer composition comprising a blend of (1) from about 0.5 to about 5 percent by weight of a color concentrate comprising an effective amount of a colorant in a thermoplastic polyetherimide ester elastomer resin carrier; and (2) from about 99.5 to about 80 percent by weight of a thermoplastic letdown polymer.

20. A colorable polymer composition as defined in Claim 19, wherein said color concentrate (1) comprises from about 20 to about 35 percent by weight of colorant and from about 80 to about 65 percent by weight of said polyetherimide ester elastomer.

21. A colorable polymer composition as defined in Claim 19 wherein said colorant comprises a pigment.

22. A colorable polymer composition as defined in Claim 21 wherein said colorant comprises an inorganic pigment.

23. A colorable polymer composition as defined in Claim 22 wherein said colorant comprises a carbon black, titanium dioxide, an iron oxide, antimony oxide, zinc oxide, chromium dioxide, lead chromate, gold, aluminum, an earth color or a mixture of any of the foregoing.

24. A colorable polymer composition as defined in Claim 23 wherein said colorant comprises a carbon black.

25. A colorable polymer composition as defined in Claim 24 wherein said carbon black comprises a high structure carbon black.

26. A colorable polymer composition as defined in Claim 19 wherein said colorant comprises an organic pigment or dye.

27. A colorable polymer composition as defined in Claim 26 wherein said colorant comprises an animal or a vegetable-based pigment, a phthalocyanine, a lithol, an isoindolene, a perylene, a toluidine, a para red dye, a toner, a lake, or a mixture of any of the foregoing.

28. A colorable polymer composition as defined in Claim 19 wherein said polyetherimide ester elastomer comprises the reaction product of

(a) a diol;

(b) a dicarboxylic acid or a diester thereof;

(c) a poly(oxyalkylene) diamine and

(d) a tricarboxylic acid having two vicinal carboxyl groups or the anhydride thereof.

29. A colorable polymer composition as defined in Claim 28 wherein, in said polyetherimide ester elastomer diol, (a) comprises butanediol; diester (b) comprises dimethyl terephthalate; poly(oxyalkylene)-diamine (c) comprises poly(propylene ether)diamine; and tricrboxylic acid anhydride (d) comprises trimellitic acid anhydride.

30. A colorable polymer composition as defined in Claim 19 wherein said thermoplastic letdown polymer comprises a polyester, a copolyetherester, a copolyetheresterimide, a polycarbonate, a poly(ester carbonate), or a mixture of any of the foregoing.

31. A colorable polymer composition as defined in Claim 30 wherein said polyester comprises poly(1,4-butylene terephthalate).

32. A colorable polymer composition as defined in Claim 30 wherein said polycarbonate comprises poly(bisphenol-A carbonate).

33. A colorable polymer composition as defined in Claim 19 further comprising an effective amount of a reinforcing agent.

34. A colorable polymer composition as defined in Claim 19, further comprising an effective amount of a flame retardant.

35. A colorable polymer composition as defined in Claim 19, further comprising effective amounts of a reinforcing agent and a flame retardant.